# EUROPEAN PATENT APPLICATION

(11) **EP 1 741 628 A1**
(43) Date of publication of application: **10.01.2007**
(21) Application number: 05014794.1
(22) Date of filing: 07.07.2005
(51) Int. Cl.: B65B 3/28, A22C 17/00, A22C 11/02

(54) **Apparatus and process for the production of food portions**

(71) Applicant: CFS Slagelse A/S, 4200 Slagelse (DK)
(72) Inventor: Kofoed, Niels Peter, 4340 Toelloese (DK); Sassmannshausen, Volker, Bad Laasphe (DE)
(74) Representative: Wolff, Felix

(57) **Abstract**

The present invention relates to an apparatus for the production of food portions with a certain weight, the apparatus comprising portion-production-means (2), weighing means (3), separation-means (4) and back-transportation-means (6,7), whereas the separation-means direct a portion, which does not meet the weight-criteria, on the back-transportation-means, which recycle the respective portion back to the portion-production-means. Furthermore, the present invention is related to a process for the production of food portions with a certain weight, whereas portion which do not meet the weight-criteria are recycled immediately.

## Description

The present invention relates to an apparatus for the production of food portions with a certain weight, the apparatus comprising portion-production-means, weighing means, separation-means and back-transportation-means, whereas the separation-means direct a portion, which does not meet the weight-criteria, on the back-transportation-means, which recycle the respective portion back to the portion-production-means. Furthermore, the present invention is related to a process for the production of food portions with a certain weight, whereas portion, which do not meet the weight-criteria are recycled immediately.

Food, for example meat, is nowadays produced on an industrial scale. Since food is a vary valuable good, there is a need to provide machines and processes, which avoid any undesired impact on the food, which e.g. promotes the perishableness of the food.

It was therefore the objective of the present invention, to provide an apparatus in order to reduce the perishableness of food.

The objective is solved by an apparatus for the production of food portions with a certain weight, with portion-production-means, weighing means, separation-means and back-transportation-means, whereas the separation-means direct a portion, which does not meet the weight-criteria, on the back-transportation-means, which recycle the respective portion back to the portion-production-means.

It was totally surprising and could not have been expected for a person skilled in the art, that food portions produced with the inventive apparatus have a very high quality and that the perishableness of this food is reduced. The conditions under which the food is for example not cooled are minimized. The inventive apparatus is easily produced and operated.

The apparatus comprises portion production means, which produce food portions. The weight of these food portions must have or exceed a certain desired weight, whereas the exceeding of the specified weight must be minimized, in order to avoid unnecessary giveaway. Furthermore, the inventive apparatus comprises separation means, which separates portions which do not meet the weight criteria out of the production process. According to the present invention, the apparatus furthermore comprises back-transportation means which recycle the portions, which are separated out of the production process, back to the portion production means. Thus, the time in which the separated food portion is subjected to environmental conditions; e. g. elevated temperatures, are minimized.

Preferably, any portion, which is not within a certain margin around the specified weight, is separated out of the production process. However, especially the underweight portions are recycled back to the portion production means.

The inventive apparatus can handle any type of food. Preferably, the food is ground food. If, for instance, the food is meat, the portions comprise preferably minced meat. In this case, the inventive apparatus comprises a grinder which is located upstream of the portion production means and the sorted out portions are then recycled to the inlet of this grinder. Preferably, the grinder comprises at its inlet a tempered storage volume, into which the separated portions are recycled.

In a preferred embodiment of the present invention, the grinder grinds the incoming product, produces at its outlet a string with a certain cross section and the portion production means cut portions with a certain length and/or certain volume from the string.

Preferably, the grinder comprises vacuum means in order to reduce the air content in the ground product.

Downstream of the product production means, the inventive apparatus comprises weighing means, which are preferably check-weighers. These check-weighers check the weight of every produced portion and determines whether the weight of this portion is within the desired margin of the set weight. The result of this weighing process is first of all used to operate the separation means; i. e. the check-weigher sends a signal to the separation means if a certain portion must be excluded from the production process. Furthermore, the results of the check-weighing are used to control the portion production means and/or the grinder. If the weight of the portions is not within the desired band width around the set weight, the check-weigher sends a signal to a control unit, which controls the grinder and/or the portion production means and the operation of these means is influenced such, that the subsequent portions comprise the desired weight.

As mentioned above, the inventive apparatus comprises separation means in order to separate portions, which do not have the desired weight, out of the production process. There are a number of components known to the person skilled in the art in order to fulfill this function. However, preferably, these separations means is an endless belt, which can be flip-flopped between two different positions. One position is the normal production-position while the other position is the separation-position.

An other embodiment of the present invention is a process for the production of food portions with a certain set weight, whereas the portions which do not meet the weight-criteria are recycled immediately to the portion production means.

Preferably, the inventive process comprises a grinder and the recycled portions are recycled to the grinder.

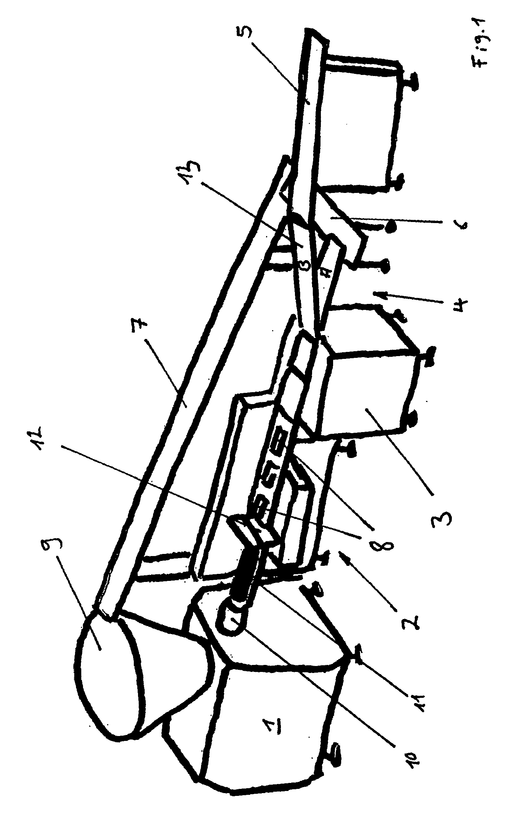

Both embodiments of the present invention are now explained according to the sole figure 1. These explanations do not limit the scope of protection of the present application.

Figure 1 shows the inventive apparatus and the inventive process. In a grinder 1 meat, that is fed to the grinder via the hopper 9, is ground and leaves the grinder as minced meat via the outlet 10 in form of a string 11. This string 11 is cut in the portion production means, which comprises a knife 12, into discrete portions 8. The length of the portions determine their weight. Furthermore, the production means 2 comprises a belt, which transports the portions 8 to a check-weigher 3, which individually weighs the portions and determines, whether the weigh of the portions are within the desired band-width around the set weight. In case a portion is not within the desired band-width around the set weight, especially if the portion is underweight, the check-weigher gives a signal to the separation means 4, which is in the present example an endless belt 13 which can be flip-flopped into two different positions A, B. In position B, the portions 8 stay within the production process and are transported to the endless belt 5, which transports the portions, for example to a packaging machine (not depicted). If the portions do not comprise the desired weight, the endless belt is flipped into position A and thus connects the check-weigher with the back-transportation means 6, 7. These back-transportation means, which are in the present example two endless belts, automatically recycle the separated portions into the hopper 9, where they are fed to the grinder again. The person skilled in the art understands, that the belts 6,7 are normally not in motion, but are only activated if the belt 12 is flipped into position a. After a certain portion has been separated out of the production process, the belt 12 is flopped back into its normal position, in which the portions are directed to belt 5. The inventive machine and the inventive process reduce the time in which a separated portion is subjected to undesired, for example temperature-conditions significantly. Thus, the quality of the food portion of the produced food portions is increased.

### Reference list

- 1: 1 grinder
- 2: portion production means
- 3: check weigher
- 4: separation means
- 5: endless belt
- 6,7: back-transportation means, endless belt
- 8: potion
- 9: hopper
- 10: outlet of the grinder
- 11: food string
- 12: knife
- 13: endless belt
- A: separation position of the separation means
- B: production position of the separation means

## Claims

1. Apparatus for the production of food portions (8) with a set weight, with portion-production-means (2), weighing means (3), separation-means (4) and back-transportation-means (6, 7), whereas the separation-means (4) direct a portion (8) which does not comprise the set weight on the back-transportation-means, which recycle the respective portion back to the portion-production-means (2).

2. Apparatus according to claim 1, **characterized in, that** the under- and/or weight portions are recycled.

3. Apparatus according to one of preceding claims, **characterized in, that** it produces ground-portions, especially minced meat portions

4. Apparatus according to claim 3, **characterized in, that** it comprises prior to the portion-production-means (2) a grinder (1) and that the portions (8) are recycled to the inlet of this grinder (1).

5. Apparatus according to claim 4, **characterized in, that** the grinder grinds the incoming product and produces a string with a certain cross-section at its outlet.

6. Apparatus according to claim 5, **characterized in, that** the portion-production-means (2) cut portions (8) with a certain length or certain volume from the string.

7. Apparatus according to one of the preceding claims, **characterized in, that** the weighing means (3) is a check-weigher.

8. Apparatus according to claim 7, **characterized in, that** the signal of the weighing-means (3) is used to operate the separation-means (4) and/or to control the portion-production-means (2).

9. Apparatus according to one of the preceding claims, **characterized in, that** the **separation-means (4) is a flip-flop.**

10. Apparatus according to one of the preceding claims, **characterized in, that** the back-transportation-means are endless belt or screw conveyor.

11. Process for the production of food portions (8) with a set weight by portion-production-means (2), **characterized in, that** portions, which do not meet the set-weight are recycled immediately to the portion-production-means (2).

12. Process according to claim 11, **characterized in, that** the portions (8) are recycled to a grinder.
